# EUROPÄISCHE PATENTANMELDUNG

(11) **EP 4 331 754 A1**
(43) Veröffentlichungstag der Anmeldung: **06.03.2024**
(21) Anmeldenummer: 23180338.8
(22) Anmeldetag: 20.06.2023
(51) Int. Cl.: B23B 27/04, B23B 27/16, B23B 29/04

(54) **SCHNEIDVORRICHTUNG**

(30) Priorität: 31.08.2022 DE 102022121948
(71) Anmelder: KARL-HEINZ ARNOLD GmbH, 73760 Ostfildern (DE)
(72) Erfinder: Meditz, Werner, 72574 Bad Urach (DE); Braun, Harald, 73061 Ebersbach (DE)
(74) Vertreter: Patentanwälte Magenbauer & Kollegen Partnerschaft mbB

(57) **Zusammenfassung**

Bei einer Schneidvorrichtung zur spanabhebenden Bearbeitung von Werkstücken, mit einem eine Halter-Längsachse (16) aufweisenden Werkzeughalter (13), wobei der Werkzeughalter (13) eine Halter-Oberseite (17) und eine Halter-Unterseite (18) aufweist, die sich jeweils entlang der Halter-Längsachse (16) erstecken und eine Halter-Stirnseite (19) aufweist, die quer zur Halter-Längsachse (16) ausgerichtet ist, wobei der Werkzeughalter (13) eine Schneideinsatz-Aufnahme (20) zur Aufnahme eines Schneideinsatzes (14) besitzt, die von einer ersten und einer dieser gegenüberliegenden zweiten Klemmfläche (22, 23) begrenzt ist, von denen eine an einem Klemmfinger (24) ausgebildet ist, der zwischen einer den Schneideinsatz (14) an die Klemmflächen (22, 23) klemmenden Klemmstellung und einer den Schneideinsatz (14) frei gebenden Freigabestellung beweglich gelagert ist, und wobei der Klemmfinger (24) den stirnseitigen Abschluss des Werkzeughalters (13) mit der daran ausgebildeten Halter-Stirnseite (19) bildet, ist im Klemmfinger wenigstens ein separat von dem Werkzeughalter ausgebildetes zur Schneidvorrichtung (11) gehörendes, an einer Schnittstelle am Klemmfinger (24) angreifendes Spannelement (29) zugeordnet, durch dessen Betätigung der Klemmfinger (24) in die Klemmstellung oder Freigabestellung überführbar ist.

## Beschreibung

Die Erfindung betrifft eine Schneidvorrichtung zur spanabhebenden Bearbeitung von Werkstücken, mit einem eine Halter-Längsachse aufweisenden Werkzeughalter, wobei der Halter eine Halter-Oberseite und eine Halter-Unterseite aufweist, die sich jeweils entlang der Halte-Längsachse erstrecken und eine Halter-Stirnseite besitzt, die quer zur Halter-Längsachse ausgerichtet ist, wobei der Werkzeughalter eine Schneideinsatz-Aufnahme zur Aufnahme eines Schneideinsatzes besitzt, die von einer ersten und einer dieser gegenüberliegenden zweiten Klemmfläche begrenzt ist, von denen eine an einem Klemmfinger ausgebildet, der zwischen einer den Schneideinsatz an die Klemmflächen klemmenden Klemmstellung und einer den Schneideinsatz frei gebenden Freigabestellung beweglich gelagert ist, und wobei der Klemmfinger den stirnseitigen Abschluss des Werkzeughalters mit der daran ausgebildeten Halter-Stirnseite bildet.

Schneidvorrichtungen dieser Art sind bereits seit langem bekannt und werden insbesondere bei der Drehbearbeitung von Werkstücken eingesetzt. Dort werden solche Schneidvorrichtungen beispielsweise in CNC-Drehmaschinen verwendet. Ein Spezialfall der Drehbearbeitung von Werkstücken ist das sogenannte Abstechen bei dem zur Fertigstellung eines Werkstücks eine Stange mittels der Schneidvorrichtung abgestochen wird. Die Materialkosten sind ein erheblicher Teil an den Gesamtkosten des Werkstücks. Um den Materialverlust durch das Abstechen zu minimieren, werden üblicherweise dünne, lange Schneidvorrichtungen, die auch als Stechschwerter oder -klingen bezeichnet werden, verwendet, was in manchen Fällen zu Vibrationen und minderer Oberflächenqualität führen kann.

Im Normalfall besitzt die Schneidvorrichtung einen Werkzeughalter, der eine Halter-Längsachse aufweist. Der Werkzeughalter wird mit einem geeigneten Schneideinsatz bestückt. Der Werkzeughalter wird dann noch an einem Grundhalter befestigt, der wiederum an einer Schnittstelle der Drehmaschine befestigt ist. In der Regel erfolgt die Drehbearbeitung, also beispielsweise das Abstechen durch Bewegung beziehungsweise Zustellung der Schneidvorrichtung an das rotierende Werkstück entlang einer Vorschubrichtung, die parallel zur Halter-Längsachse verläuft. Solchen Vorgänge werden auch als Drehbearbeitung entlang der X-Achse bezeichnet.

Um das Risiko eines Bruchs derartig dünner Stechschwerter zu verhindern, schlägt die EP 3 357 613 A1 vor, zum Abstechen die Y-Achse zu verwenden. In diesem Fall steht die Vorschubbewegung im Winkel von 90° zur Halter-Längsachse. Die Krafteinwirkung auf das Schneidwerkzeug, insbesondere auf das Stechschwert ist hier günstiger und wirkt über einen größeren Teil in den Werkzeughalter hinein als beim Drehbearbeiten in X-Richtung.

Die Schneidvorrichtungen, die zur X-Drehbearbeitung und zur Y-Drehbearbeitung, insbesondere für das Abstechen in X- oder Y-Richtung, verwendet werden, unterscheiden sich darüber hinaus, abgesehen von der unterschiedlichen Ausrichtung der Vorschubrichtung und Halter-Längsachse, auch konstruktiv. Bei den Schneidvorrichtungen, die für die Drehbearbeitung entlang der Y-Achse verwendet werden, befindet sich der Klemmfinger der zum Festklemmen des Schneideinsatzes in der zugeordneten Schneideinsatz-Aufnahme am Werkzeughalter verwendet wird, am stirnseitigen Ende des Werkzeughalters angeordnet. Bei dieser Ausgestaltung steht im Vergleich zu den Klemmfingern von herkömmlichen Schneidvorrichtungen, die für die Dreh- oder Stechbearbeitung in X-Richtung verwendet werden, weniger Platz zur Verfügung, um eine Klemmbetätigung des Klemmfingers also dessen Bewegung zwischen einer Klemmstellung und einer Freigabestellung durchzuführen. Mit anderen Worten, der Klemmfinger ist in der Regel deutlich kürzer. Dies kann im ungünstigen Fall zu einer unzureichenden Klemmung des Schneideinsatzes führen.

Aufgabe der Erfindung ist es daher, eine Schneidvorrichtung der eingangs erwähnten Art zu schaffen, die bei der Drehoder Stechbearbeitung entlang der Y-Achse für zuverlässige und störungsunanfällige Bearbeitungsergebnisse an dem zu bearbeitenden Werkstück sorgt.

Diese Aufgabe wird durch eine Schneidvorrichtung mit den Merkmalen des unabhängigen Anspruchs 1 gelöst.

Weiterbildungen der Erfindung sind in den Unteransprüchen dargestellt.

Die erfindungsgemäße Schneidvorrichtung zeichnet sich dadurch aus, dass dem Klemmfinger wenigstens ein separat von dem Werkzeughalter ausgebildetes zur Schneidvorrichtung gehörendes, an einer Schnittstelle am Klemmfinger angreifendes Spannelement zugeordnet ist, durch dessen Betätigung der Klemmfinger in die Klemmstellung oder Freigabestellung überführbar ist.

Obgleich das Platzangebot, beispielsweise in Folge der kurzen Längserstreckung und/oder anderer Geometrie des Klemmfingers im Vergleich zu Schneidvorrichtungen, die für die X-Drehbearbeitung verwendet werden, geringer ist, wird erfindungsgemäß ein separates Spannelement verwendet, das an einer Schnittstelle des Klemmfingers selber angesetzt beziehungsweise gelagert ist. Das Spannelement kann zwischen einer Spannstellung und einer Lösestellung bewegt werden, wobei die Spannstellung des Spannelements mit der Klemmstellung des Klemmfingers korreliert, während die Lösestellung des Spannelements mit der Freigabestellung des Klemmfingers korreliert. Die Klemmkraft wird über die Spannschraube direkt am Klemmfinger eingeleitet und das Spannelement sorgt in seiner Spannstellung für eine gleichbleibend gute Klemmkraft zwischen den Klemmflächen und dem zugeordneten Schneideinsatz.

Bei einer Weiterbildung der Erfindung ist das wenigstens eine Spannelemente als Spannschraube ausgebildet, die in einer eine Bohrungsachse aufweisenden Bohrung aufgenommen ist, wobei die Bohrung den Klemmfinger durchsetzt und in einem Basisabschnitt des Werkzeughalters ausläuft. Zweckmäßigerweise besitzt die Bohrung im Werkzeughalter ein Innengewinde zum Verschrauben mit dem an der Spannschraube ausgebildeten Außengewinde. Die Bohrung ist zweckmäßigerweise als SacklochBohrung ausgebildet und endet im Basisabschnitt des Werkzeughalters.

In besonders bevorzugter Weise ist die Bohrungsachse der Bohrung im Wesentlichen parallel zur Halter-Längsachse ausgerichtet. Während die Vorschubrichtung im Gebrauch der Schneidvorrichtung senkrecht zur Halter-Längsachse ausgerichtet ist, verläuft die Bohrungsachse parallel zur Halter-Längsachse. Dies bewirkt eine sehr gute Einleitung der Klemmkraft auf den Schneideinsatz.

Bei der Weiterbildung der Erfindung ist im Werkzeughalter ein von der Schneideinsatz-Aufnahme ausgehender Trennschlitz ausgebildet, der den Klemmfinger von dem Basisabschnitt des Werkzeughalters trennt.

Zweckmäßigerweise durchsetzt die Spannschraube den Trennschlitz.

Besonders bevorzugt sind Klemmfinger und Basisabschnitt einstückig über eine zwischen dem Schlitz-Ende des Trennschlitzes und der Halter-Unterseite ausgebildeten Verbindungsabschnitt miteinander verbunden. Bei dieser Ausgestaltung bildet der Verbindungsabschnitt eine Art Schwenklager, um das der Klemmfinger zwischen der Klemmstellung und der Freigabestellung schwenkbar ist, falls das Spannelement, insbesondere die Spannschraube betätigt wird.

Bei einer Weiterbildung der Erfindung weist die Schnittstelle am Klemmfinger eine Ansenkung zur Aufnahme eines Schraubenkopfes der Spannschraube auf. Bei der Spannschraube kann es sich beispielsweise um eine Senkkopf-Schraube handeln.

Bei einer Weiterbildung der Erfindung sind die Klemmflächen im Winkel zur Halter-Längsachse ausgerichtet, insbesondere in einem Winkel größer 45°.

In besonders bevorzugter Weise weist der Werkzeughalter ein Werkzeughalter-Kühlmittel-Kanalsystem mit mehreren Kühlmittelkanälen auf, wobei das Kühlmittel-Kanalsystem wenigstens eine, insbesondere mehrere, Kühlmittel-Auslassöffnungen aufweist, über die bei der spanabhebenden Bearbeitung Kühlmittel zum Schneideinsatz leitbar ist. Besonders bevorzugt ist einer der Kühlmittelkanäle über den Verbindungsabschnitt zwischen Klemmfinger und Basisabschnitt geführt und endet an einer benachbart zur Klemmfläche des Klemmfingers angeordneten Klemmfinger-Stirnfläche ausgebildeten Kühlmittel-Auslassöffnung. Zweckmäßigerweise ist die Kühlmittel-Auslassöffnung derart ausgerichtet, dass austretendes Kühlmittel, bei dem es sich um ein Kühl- und Schmiermittel beziehungsweise Kühlschmierstoff handelt, auf die Spanfläche des Schneideinsatzes geleitet wird. Die betreffende Kühlmitte-Auslassöffnung ist derart ausgerichtet, dass es zu einer Spanunterspülung von auf der Spanfläche befindlichen, vom Werkstück stammenden Materialspänen kommt.

In besonders bevorzugter Weise ist eine weitere KühlmittelAuslassöffnung vorgesehen, die derart angeordnet ist, dass Kühlmittel in den Bereich der Freifläche des Schneideinsatzes gelangt, wodurch die Möglichkeit besteht, gleichzeitig die Spanfläche und auch die Freifläche zu kühlen.

Es ist möglich, dass die weitere Kühlmittel-Auslassöffnung am Werkzeughalter, beispielsweise im Bereich der Halter-Oberseite und/oder an einem Grundhalter ausgebildet ist.

Bei einer Weiterbildung der Erfindung weist der Klemmfinger einen schwertartig ausgebildeten, mit der Klemmfläche ausgestatteten Klemmabschnitt auf, der eine Klemmabschnitts-Breite und eine sich in einer senkrecht zur Halter-Längsachse liegenden Halter-Höhenrichtung erstreckende Klemmabschnitts-Länge aufweist, und wobei der Klemmfinger einen mit dem Klemmabschnitt verbundenen Lagerabschnitt aufweist, der eine Lagerabschnitts-Breite und eine Lagerabschnitts-Länge aufweist.

In besonders bevorzugter Weise ist die Lagerabschnitts-Breite des Lagerabschnitts größer als die Klemmabschnitts-Breite des Klemmabschnitts, insbesondere liegt das Verhältnis von Lagerabschnitts-Breite zur Klemmabschnitts-Breite bei zwei bis vier. Zweckmäßigerweise ist die Klemmabschnitts-Länge des Ar-Klemmabschnitts des Klemmfingers größer als die Lagerabschnitts-Länge des Lagerabschnitts des Klemmfingers.

Bei einer Weiterbildung der Erfindung weist die Schneidvorrichtung einen Grundhalter auf, an dem der Werkzeughalter über eine Befestigungseinrichtung befestigbar oder befestigt ist.

In besonders bevorzugter Weise weist die Befestigungseinrichtung mehrere am Werkzeughalter ausgebildete Befestigungslöcher auf sowie die Befestigungslöcher durchsetzende Befestigungselemente, insbesondere Befestigungsschrauben, wobei die Befestigungslöcher entlang der Halter-Längsachse hintereinander angeordnet sind, wobei vorzugsweise wenigstens zwei der Befestigungslöcher fluchtend zueinander ausgerichtet sind.

Bei einer Weiterbildung der Erfindung weist die Schneidvorrichtung einen in der Schneideinsatz-Aufnahme eingesetzten Schneideinsatz, insbesondere in Form einer Schneidplatte, auf.

Ein bevorzugtes Ausführungsbeispiel der Erfindung ist in der Zeichnung dargestellt und wird im Folgenden näher erläutert. In der Zeichnung zeigen:
- Figur 1: eine Seitenansicht auf ein bevorzugtes Ausführungsbeispiel der erfindungsgemäßen Schneidvorrichtung,
- Figur 2: eine Draufsicht auf die Schneidvorrichtung von Figur 1 und
- Figur 3: eine Stirnansicht auf den Werkzeughalter von Figur 1 ohne Grundhalter.

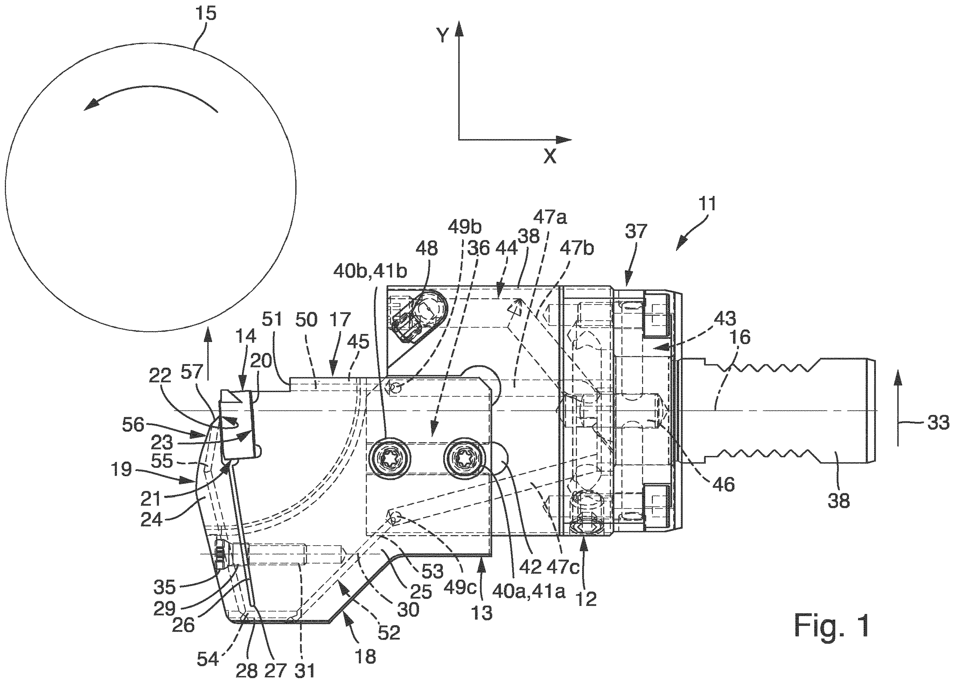

Die Figuren 1 bis 3 zeigen ein bevorzugtes Ausführungsbeispiel der Erfindungsgemäßen Schneidvorrichtung 11. Die Schneidvorrichtung 11 ist hier rein beispielhaft in einer Ausführungsform dargestellt, die einen in einer Bearbeitungsmaschine zur spanenden Bearbeitung einsatzbaren und dort befestigbaren Grundhalter 12 zeigt.

Am Grundhalter 12 ist wiederum ein Werkzeughalter 13 eingespannt, der zur Aufnahme einer Schneideinsatzes 14 zur spanenden Bearbeitung von Werkstücken 15 dient.

Die Kombination aus Werkzeughalter 13 und Schneideinsatz 14 lässt sich auch mit Schneidwerkzeug bezeichnen.

Im dargestellten Beispielsfall ist die Schneidvorrichtung 11 für eine Drehbearbeitung von Werkstücken 15, bei denen sich beispielsweise um Stangen handeln kann, vorgesehen. Insbesondere eignet sich der in Figur 1 dargestellte Werkzeughalter 13 mit entsprechendem Schneideinsatz 14 zum Abstechen von Werkstücken 15, sodass der Werkzeughalter 13 in diesem Fall auch als Stechklinge bezeichnet werden könnte.

Wie insbesondere in Figur 1 gezeigt, wird der mit dem Schneideinsatz 14 bestückte Werkzeughalter 13 an einem Grundhalter 12 befestigt, der wiederum in einer Aufnahme der Bearbeitungsmaschine, insbesondere Drehmaschine, aufgenommen ist.

Der Werkzeughalter 13 besitzt eine Halter-Längsachse 16, entlang der sich eine Halter-Oberseite 17 beziehungsweise Oberkante und entgegengesetzt hierzu ausgerichtet eine Halter-Unterseite 18 beziehungsweise Unterkante erstrecken. Ferner weist der Werkzeughalter 13 eine Halter-Stirnseite 19 auf, die quer zur Halter-Längsachse 16 ausgerichtet ist.

Wie ferner in Figur 1 gezeigt, besitzt der Werkzeughalter 13 eine Schneideinsatz-Aufnahme 20 zur Aufnahme des Schneidansatzes 14. Im beschriebenen Beispielsfall des Stechdrehens ist es aufgrund der schwertähnlichen Ausgestaltung zumindest eines Teils des Werkzeughalters 13 notwendig, einen relativ schmalen Schneideinsatz 20 zu verwenden, der in diesem Fall auch als Schneidplatte bezeichnet werden könnte. Die Schneideinsatz-Aufnahme 20 könnte daher auch als Plattensitz bezeichnet werden.

Die Schneideinsatz-Aufnahme 20 definiert einen Aufnahmeraum 21 für den Schneideinsatz, wobei der Aufnahmeraum 21 von einer ersten und einer dieser gegenüberliegenden zweiten Klemmfläche 22, 23 begrenzt ist.

Zweckmäßigerweise sind die Klemmflächen 22, 23 und die korrespondiert hierzu am Schneideinsatz 14 ausgebildeten Gegen-Klemmflächen nach Art eines Prismas ausgestaltet, das heißt an der Klemmfläche und der zugeordneten Gegen-Klemmfläche sind eine Klemmnut und ein Klemmvorsprung ausgebildet, die beim Klemmen nach Art von Nut und Feder ineinander eingreifen.

Wie ferner in Figur 1 gezeigt, sind die Klemmflächen 22, 23 schräg, insbesondere in einem Winkel von größer 45°, vorzugsweise größer 80° gegenüber der Halter-Längsachse 16 ausgerichtet.

Ein wesentliches Element des Werkzeughalters 13 ist ein Klemmfinger 24, der zwischen einer den Schneideinsatz 14 an die Klemmflächen 22, 23 klemmenden Klemmstellung und einer den Schneideinsatz 14 freigebenden Freigabestellung beweglich gelagert ist. Im gezeigten Beispielsfall ist der Klemmfinger einstückig mit einem Basisabschnitt 25 des Werkzeughalters 13 verbunden. Am Basisabschnitt 25 am Klemmfinger sind durch einen von der Schneideinsatz-Aufnahme 20 ausgehenden Trennschlitz 26 voneinander getrennt.

Der Trennschlitz verläuft ebenfalls schräg zur Halter-Längsachse 16, vorzugsweise in einem Winkel größer 45°. Der Klemmfinger 24 und der Basisabschnitt 25 sind - wie erwähnt - einstückig miteinander verbunden und zwar über eine zwischen dem Schlitz-Ende 27 des Trennschlitzes 26 und der Halter-Unterseite 18 ausgebildeten Verbindungsabschnitt 28. Ein wesentlicher Aspekt ist, dass der Klemmfinger 24 den stirnseitigen Abschluss des Werkzeughalters 13 mit der daran ausgebildeten Halter-Stirnseite 19 bildet. Der Klemmfinger 24 erstreckt sich also ebenfalls mit seiner Längsausdehnung schräg zur Halterung-Längsachse, insbesondere in einem Winkel von größer 45°.

Im gezeigten Beispielsfall bildet der Verbindungsabschnitt 28 eine Art Schwenklager für den Klemmfinger 24, der zur Überführung von der Klemmstellung in die Freigabestellung oder umgekehrt um dieses Schwenklager schwenken kann.

Ein wesentlicher Aspekt ist, dass die Einleitung der Klemmbewegung von der Freigabestellung des Klemmfingers 24 in die den Schneideinsatz an die Klemmflächen 22, 23 festklemmenden Klemmstellung mittels wenigstens einem separat von dem Werkzeughalter 13 ausgebildeten zur Schneidvorrichtung 11 gehörenden, an einer Schnittstelle am Klemmfinger 24 angreifenden Spannelement 29 durchgeführt wird, durch dessen Betätigung der Klemmfinger 24 in die Klemmstellung oder Freigabestellung überführbar ist.

Im gezeigten Beispielsfall ist das wenigstens eine Spannelement 29 als Spannschraube ausgebildet, die in einer eine Bohrungsachse 30 aufweisenden Bohrung 31 aufgenommen ist, wobei die Bohrung 31 dem Klemmfinger 24 durchsetzt und in dem Basisabschnitt 25 des Werkzeughalters 13 ausläuft.

Die Bohrungsachse 30 der Bohrung 31 ist im Wesentlichen parallel zur Halter-Längsachse 16 ausgerichtet.

Wie insbesondere in Figur 1 gezeigt, durchsetzt die Spannschraube den Klemmfinger 24, den Trennschlitz 26 und endet in der als Sacklock-Bohrung ausgebildeten Bohrung 31 im Basisabschnitt 25 des Werkzeughalters 13.

Zweckmäßigerweise besitzt ein im Basisabschnitt 25 befindlicher Bohrungsabschnitt der Bohrung 31 ein Innengewinde (nicht dargestellt), das mit einem Außengewinde der Spannschraube verschraubbar ist.

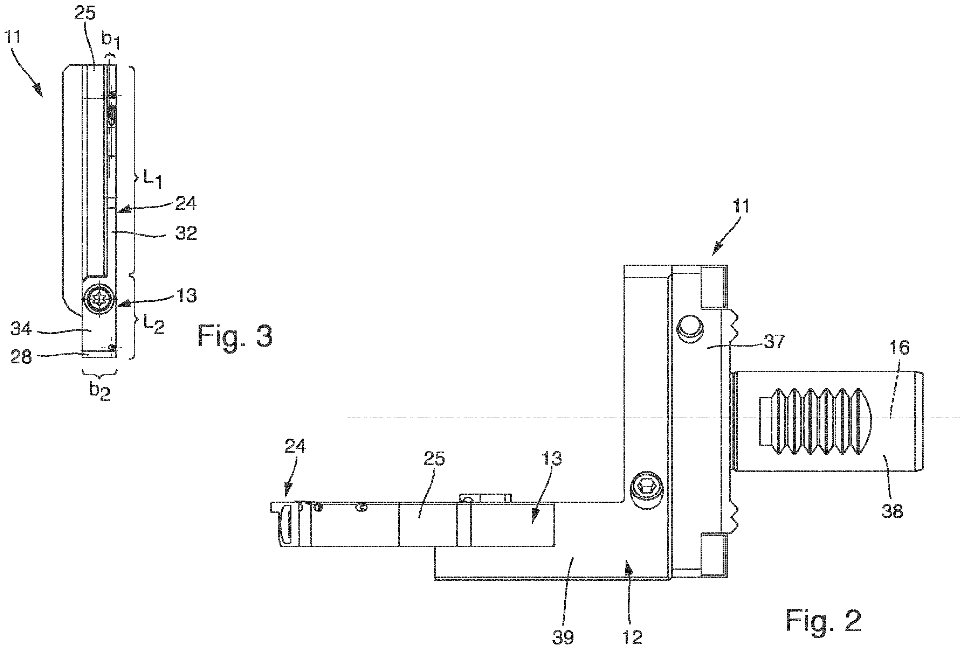

Wie insbesondere in Figur 3 gezeigt, besitzt der Klemmfinger verschiedene Funktionsabschnitte. Der Klemmfinger 24 weist einen schwertartig ausgebildeten, mit der Klemmfläche ausgestatteten Klemmabschnitt 32 (Figur 3) auf, der eine Klemmabschnitts-Breite b₁ und eine sich in einer senkrecht zur Halter-Längsachse 16 liegenden Halter-Höhenrichtung 33 erstreckende Klemmabschnitts-Länge l₁ aufweist. Ferner besitzt der Klemmfinger 24 einen mit dem Klemmabschnitt 32 verbundenen Lagerabschnitt 34, der eine Lagerabschnitts-Breite b₂ und eine Lagerabschnitts-Länge l₂ aufweist. Wie ferner in Figur 3 gezeigt, ist die Lagerabschnitts-Breite l₂ des Lagerabschnitts 34 größer als die Klemmabschnitts-Breite des schwertartigen Klemmabschnitts 32. Das Verhältnis von Lagerabschnitts-Breite b₂ zur Klemmabschnitts-Breite b₁ liegt zweckmäßigerweise bei zwei bis vier.

Der Lagerabschnitt 34 mit seiner Lagerabschnitts-Breite b₂ ist so ausgestaltet, dass daran die Schnittstelle für die Spannschraube ausgebildet ist. Die Bohrung 31 verläuft also durch den Lagerabschnitt 34 des Klemmfingers 24.

Wie ferner in Figur 3 gezeigt, ist die Klemmabschnitts-Länge l₁ größer als die Lagerabschnitts-Länge l₂, insbesondere liegt das Verhältnis von Klemmabschnitts-Länge zur Lagerabschnitts-Länge l₂ durch l₁ bei 2 bis 4. Wie ferner in Figur 1 gezeigt, kann die Mündung der Bohrung am Lagerabschnitt 34 des Klemmfingers 14 mit einer Ansenkung 35 zur Aufnahme eines Schraubenkopfes der Spannschraube ausgebildet sein. Die Spannschraube kann in diesem Fall als Senkkopfschraube ausgebildet sein.

Wie bereits erwähnt wird der Werkzeughalter 13 über eine Befestigungseinrichtung 36 an dem Grundhalter 12 befestigt. Wie insbesondere in Figur 2 gezeigt, ist der Grundhalter 12 im gezeigten Beispielsfall nach einer Art eines Winkelstück ausgebildet, und besitzt einen Grundhalter-Basisabschnitt 37, an dessen Rückseite ein Befestigungselement, insbesondere Befestigungszapfen 38, ausgebildet ist, wobei der Befestigungszapfen 38 zur Befestigung an einer zugeordneten Lageraufnahme beziehungsweise eines Magazins an der Bearbeitungsmaschine, insbesondere Drehmaschine, dient.

An der der mit dem Befestigungszapfen 38 ausgestatteten Rückseite entgegensetzten Vorderseite des Grundhalters-Basisabschnitts 37 ist ein Grundhalter-Lagerabschnitt 39 zur Lagerung des Werkzeughalters 13 ausgebildet. Die zur Befestigung des Werkzeughalters 13 am Grundhalter-Lagerabschnitt 39 dienende Befestigungseinrichtung 36 weist mehrere am Werkzeughalter 13 ausgebildete Befestigungslöcher 40a, 40b auf sowie die Befestigungslöcher 40a, 40b durchsetzende Befestigungselemente 41a, 41b, insbesondere Befestigungsschrauben, wobei die Befestigungslöcher 40a, 40b entlang der Halter-Längsachse 16 hintereinander angeordnet sind. Im gezeigten Beispielsfall sind im Werkzeughalter 13 zwei Befestigungslöcher 40a, 40b ausgebildet, die zweckmäßigerweise entlang der Halter-Längsachse 16 fluchtend zueinander ausgerichtet sind.

Wie insbesondere in Figur 1 gezeigt, ist am Grundhalter-Lagerabschnitt 39 ein Befestigungsschlitz 42 ausgebildet, der es ermöglicht, den Werkzeughalter 13 in beliebigen Positionen entlang der Schlitzlänge des Befestigungsschlitzes 42 relativ zu dem Grundhalter 12 zu befestigen.

Ein wichtiger Aspekt bei der Drehbearbeitung von Werkstücken ist die Zufuhr von Kühl- und Schmiermittel (im Folgenden vereinfacht als "Kühlmittel" bezeichnet). Hierzu weist die Schneidvorrichtung eine Kühlmittelzuführeinrichtung 43 auf, die im gezeigten Beispielsfall aus einem Grundhalter-Kühlmittel-Kanalsystem 44 und einem Werkzeughalter-Kühlmittel-Kanalsystem 45 besteht.

Wie insbesondere in Figur 1 gezeigt, weist das Grundhalter-Kühlmittel-Kanalsystem 44 Kühlmittelzufuhranschlüsse auf, über die Kühlmittel von einer externen Kühlmittelquelle zuführbar ist. Kühlmittel gelangt dann in einen Zentralkanal 46 und von dort in Verteilerkanäle, wobei es sich bei dem gezeigten Ausführungsbeispiel um drei Verteilerkanäle 47a, 47b, 47c handelt. Der erste Verteilerkanal 47a verläuft vollständig im Grundhalter 12 und mündet in einer Kühlmitteldüse 48, die zweckmäßigerweise verschwenkbar an dem Grundhalter-Lagerabschnitt 39 gelagert ist. Durch die Verschwenkbarkeit der Kühlmitteldüse 48 lässt sich der Kühlmittelstrahl gezielt einstellen, sodass eine gezielte Kühlmittelzufuhr an die zu kühlenden Bereiche, bei dem es sich insbesondere um die Schneidkante, die Spanfläche und die des Schneideinsatzes handelt, möglich ist. Der zweite und der dritte Verteilerkanal 47b, 47c endet im Bereich der Vorderkante des Grundhalter-Lagerabschnitts 39 mittels einer Kühlmittel-Übergabe-Schnittstelle 49b, 49c. An den jeweiligen Kühlmittel-Übergabe-Schnittstellen 49a, 49b erfolgt eine Verbindung mit im Werkzeughalter 13 ausgebildeten Kühlkanälen des Werkzeughalter-Kühlmittel-Kanalsystems 45. Der zweite Verteilerkanal 47b ist über die zugeordnete Kühlmittelübergabe-Schnittstelle 49b mit einem ersten Kühlkanal 50 im Werkzeughalter 13 verbunden. Dieser erste Kühlkanal 50 verläuft im Wesentlichen parallel zur Halter-Längsachse 16 und mündet an einer an der Halter-Oberseite 17 ausgebildeten Stufe mittels einer ersten Kühlmittelauslassöffnung 51 aus. Austretendes Kühlmittel kann dann in einer Richtung im Wesentlichen parallel zur Halter-Längsachse 16 in Richtung Schneideinsatz 14 strömen und gelangt von dort an die Freifläche beziehungsweise Schneidkante des Schneideinsatzes 14. Der dritte Verteilerkanal 47c im Grundhalter 12 ist mit einem zweiten ebenfalls über eine der Kühlmittelübergabe-Schnittstellen verbundenen zweiten Kühlmittelkanal 52 im Werkzeughalter 13 verbunden.

Wie die Zusammenschau der Figuren 2 und 3 zeigt, ist der Durchmesser des zweiten Kühlmittelkanals im Werkzeughalter 12 relativ klein, da er im Bereich des schwertartigen Klemmabschnitts 32 des Klemmfingers 24 verläuft. Der zweite Kühlmittelkanal 52 hat einen ersten Kanalabschnitt 53, der ausgehend von der Kühlmittelübergabe-Schnittstelle 49c in Richtung Halter-Unterseite 18 verläuft. Dabei ist er so ausgerichtet, dass er die im Werkzeughalter befindliche Sacklochbohrung unterquert. An den ersten Kanalabschnitt des zweiten Kühlmittelkanals 52 schließt sich ein zweiter Kanalabschnitt 54 an, der im Wesentlichen parallel zur Halterung-Unterseite 17 verläuft. Wesentlich dabei ist, dass dieser zweite Kanalabschnitt 54 durch den Verbindungsabschnitt 28 der zwischen dem Schlitzende des Trennschlitzes 26 und der Halter-Unterseite 18 ausgebildet ist, verläuft. Von dem zweiten Kanalabschnitt 54 zweigt ein dritter Kanalabschnitt 55 ab, der im Wesentlichen in Längsrichtung des Klemmfingers 24 durch den Klemmabschnitt 32 des Klemmfingers verläuft, im gezeigten Beispielsfall noch einmal seine Richtung ändert und an einer Klemmfinger-Stirnseite 56 des Klemmfingers 24 durch eine weitere Kühlmittel-Auslassöffnung 57 ausmündet. Von dort kann Kühlmittel auf die Spanfläche und die Schneidkante des Schneideinsatzes 14 strömen.

Wie insbesondere in Figur 1 gezeigt, wird die beschriebene Schneidvorrichtung 11 im gezeigten Beispielsfall zur Drehbearbeitung von Werkstücken 13 mittels Abstechens verwendet, wobei die Y-Achse verwendet wird. Im Einsatz wird daher die Schneidvorrichtung 11 entlang einer Vorschubrichtung, die im 90 °-Winkel zur Halter-Längsachse 16 steht, an das zu bearbeitende Werkstück 15 zugestellt. Das Spannelement 29 in Form der Spannschraube sorgt dabei für eine zuverlässige Klemmung des Schneideinsatzes 14am zugeordneten Sitz, wodurch hohe Schnittwerte und kurze Bearbeitungszeiten realisiert werden können.

## Patentansprüche

1. Schneidvorrichtung zur spanabhebenden Bearbeitung von Werkstücken (15), mit einem eine Halter-Längsachse (16) aufweisenden Werkzeughalter (13), wobei der Werkzeughalter (13) eine Halter-Oberseite (17) und eine Halter-Unterseite (18) aufweist, die sich jeweils entlang der Halter-Längsachse (16) erstecken und eine Halter-Stirnseite (19) aufweist, die quer zur Halter-Längsachse (16) ausgerichtet ist, wobei der Werkzeughalter (13) eine Schneideinsatz-Aufnahme (20) zur Aufnahme eines Schneideinsatzes (14) besitzt, die von einer ersten und einer dieser gegenüberliegenden zweiten Klemmfläche (22, 23) begrenzt ist, von denen eine an einem Klemmfinger (24) ausgebildet ist, der zwischen einer den Schneideinsatz (14) an die Klemmflächen (22, 23) klemmenden Klemmstellung und einer den Schneideinsatz (14) frei gebenden Freigabestellung beweglich gelagert ist, und wobei der Klemmfinger (24) den stirnseitigen Abschluss des Werkzeughalters (13) mit der daran ausgebildeten Halter-Stirnseite (19) bildet, **dadurch gekennzeichnet, dass** dem Klemmfinger (24) wenigstens ein separat von dem Werkzeughalter (13) ausgebildetes zur Schneidvorrichtung (11) gehörendes, an einer Schnittstelle am Klemmfinger (24) angreifendes Spannelement (29) zugeordnet ist, durch dessen Betätigung der Klemmfinger (24) in die Klemmstellung oder Freigabestellung überführbar ist.

2. Schneidvorrichtung nach Anspruch 1, **dadurch gekennzeichnet, dass** das wenigstens eine Spannelement (29) als Spannschraube ausgebildet ist, die in einer eine Bohrungsachse (30) aufweisenden Bohrung (31) aufgenommen ist, wobei die Bohrung (31) den Klemmfinger (24) durchsetzt und in einem Basisabschnitt (25) des Werkzeughalters (13) ausläuft.

3. Schneidvorrichtung nach Anspruch 2, **dadurch gekennzeichnet, dass** die Bohrungsachse (30) der Bohrung (31) im Wesentlichen parallel zur Halter-Längsachse (16) ausgerichtet ist.-

4. Schneidvorrichtung nach einem der vorhergehenden Ansprüche, **dadurch gekennzeichnet, dass** im Werkzeughalter (13) ein von der Schneideinsatz-Aufnahme (20) aus ausgehender Trennschlitz (26) ausgebildet ist, der den Klemmfinger (24) von dem Basisabschnitt (25) des Werkzeughalters (13) trennt.

5. Schneidvorrichtung nach Anspruch 4, **dadurch gekennzeichnet, dass** Klemmfinger (24) und Basisabschnitt (25) einstückig über eine zwischen dem Schlitz-Ende (27) des Trennschlitzes (26) und der Halter-Unterseite (18) ausgebildeten Verbindungsabschnitt (28) miteinander verbunden sind.

6. Schneidvorrichtung nach Anspruch 4 oder 5, **dadurch gekennzeichnet, dass** die Spannschraube den Trennschlitz (26) durchsetzt.

7. Schneidvorrichtung nach einem der Ansprüche 2 bis 6, **dadurch gekennzeichnet, dass** die Schnittstelle am Klemmfinger (24) eine Ansenkung (35) zur Aufnahme eines Schraubenkopfes der Spannschraube aufweist

8. Schneidvorrichtung nach einem der vorgehenden Ansprüche, **dadurch gekennzeichnet, dass** die Klemmflächen (22, 23) im Winkel zur Halter-Längsachse (16) ausgerichtet sind, insbesondere in einem Winkel größer 45°.

9. Schneidvorrichtung nach einem der vorhergehenden Ansprüche, **dadurch gekennzeichnet, dass** der Werkzeughalter (13) ein Werkzeughalter-Kühlmittel-Kanalsystem (45) mit mehreren Kühlmittelkanälen (50, 52) aufweist, wobei das Werkzeughalter-Kühlmittel-Kanalsystem (45) wenigstens eine, insbesondere mehrere, Kühlmittelauslassöffnungen (51, 57) aufweist, über die bei der spanabhebenden Bearbeitung Kühlmittel zum Schneideinsatz (14) leitbar ist.

10. Schneidvorrichtung nach Anspruch 9, **dadurch gekennzeichnet, dass** eine der Kühlmittelkanäle (52) über den Verbindungsabschnitt (28) zwischen Klemmfinger (24) und Basisabschnitt (25) geführt ist und an einer benachbart zur Klemmfläche (22) des Klemmfingers (24) angeordneten Klemmfinger-Stirnfläche (56) ausgebildeten Kühlmittelauslassöffnung (57) endet.

11. Schneidvorrichtung nach einem der vorgehenden Ansprüche, **dadurch gekennzeichnet, dass** der Klemmfinger (24) einen schwertartig ausgebildeten, mit der Klemmfläche (22) ausgestatteten Klemmabschnitt (32) aufweist, der eine Klemmabschnitts-Breite (b₁) und eine sich in einer senkrecht zur Halter-Längsachse (16) liegenden Halter-Höhenachse (33) erstreckende Klemmabschnitts-Länge (l₁) aufweist, und wobei der Klemmfinger (24) einen mit dem Klemmabschnitt (32) verbundenen Lagerabschnitt aufweist, der eine Lagerabschnitts-Breite (b₂) und eine Lagerabschnitts-Länge (l₂) aufweist.

12. Schneidvorrichtung nach Anspruch 11, **dadurch gekennzeichnet, dass** die Lagerabschnitts-Breite (b2) des Lagerabschnitts (34) größer als die Klemmabschnitts-Breite (b1) des Klemmabschnitts (32) ist, wobei vorzugsweise das Verhältnis b_{2/}b₁ von Lagerabschnitts-Breite (b2) zu Klemmabschnitts-Breite (b1) bei 2 bis 4 liegt.

13. Schneidvorrichtung nach einem der vorgehenden Ansprüche, **gekennzeichnet durch** einen Grundhalter (12), an dem der Werkzeughalter (13) über eine Befestigungseinrichtung (36) befestigbar oder befestigt ist.

14. Schneidvorrichtung nach Anspruch 13, **dadurch gekennzeichnet, dass** die Befestigungseinrichtung (36) mehrere am Werkzeughalter (13) ausgebildete Befestigungslöcher (40a, 40b) aufweist sowie die Befestigungslöcher (40a, 40b) durchsetzende Befestigungselemente (41a, 41b), insbesondere Befestigungsschrauben, wobei die Befestigungslöcher (40a, 40b) entlang der Halter-Längsachse (16) hintereinander angeordnet sind, wobei vorzugsweise wenigstens zwei der Befestigungslöcher (40a, 40b) entlang der Halter-Längsachse (16) fluchtend zueinander ausgerichtet sind.

15. Schneidvorrichtung nach einem der vorgehenden Ansprüche, **gekennzeichnet durch** einen in der Schneideinsatz-Aufnahme (20) eingesetzten Schneideinsatz (14), insbesondere in Form einer Schneidplatte.
